# EUROPEAN PATENT APPLICATION

(11) **EP 4 700 905 A1**
(43) Date of publication of application: **25.02.2026**
(21) Application number: 25194607.5
(22) Date of filing: 07.08.2025
(51) Int. Cl.: H01M 10/48, H01M 50/209, H01M 50/30, H01M 50/383, H01M 10/052

(54) **BATTERY MODULE**

(30) Priority: 20.08.2024 KR 20240111522
(71) Applicant: SAMSUNG SDI CO., LTD., Yongin-si, Gyeonggi-do 17084 (KR)
(72) Inventor: KIM, Tae Jin, 16678 Suwon-si, Gyeonggi-do (KR)
(74) Representative: Gulde & Partner

(57) **Abstract**

A battery module (100) includes a housing (110), at least one battery cell (120) accommodated inside the housing, an extinguishing cartridge (150) inside the housing, the extinguishing cartridge being filled with an extinguishing fluid, a triggering unit (150) inside the housing, the triggering unit being configured to release the extinguishing fluid from the extinguishing cartridge toward the at least one battery cell, and a controller (130) configured to control the triggering unit according to an abnormal condition of the at least one battery cell.

## Description

### BACKGROUND

### 1. Field

The present disclosure relates to a battery module.

### 2. Description of the Related Art

In general, with a rapidly increasing demand for portable electronics, such as laptops, video cameras, and mobile phones, and commercialization of robots and electric vehicles, research is actively carried out to develop high-performance secondary batteries enabling repeated charging/discharging. Secondary batteries are widely used in small devices, such as portable electronics, as well as medium and large devices, such as electric vehicles and energy storage systems (ESS), for power generation and energy storage. In particular, in medium or large devices, multiple battery cells may be electrically connected to each other to form a battery module to enhance output and/or capacity of the batteries.

The secondary battery may be used as a battery module or a battery pack formed of a plurality of unit battery cells connected in series and/or parallel to provide high energy density. The battery module or the battery pack may be formed by interconnecting electrode terminals of a plurality of unit batteries to meet the required amount of power and implement, for example, a high-power secondary battery of an electric vehicle.

The above information disclosed in this Background section is provided for enhancement of understanding of the background of the present disclosure, and, therefore, it may contain information that does not constitute related (or prior) art.

### SUMMARY

According to an embodiment, there is provided a battery module, which includes a housing, a battery cell accommodated inside the housing, a extinguishing cartridge disposed inside the housing and filled with an extinguishing fluid therein, a triggering unit configured to allow the extinguishing fluid of the extinguishing cartridge to be discharged to the battery cell, and a controller configured to control the triggering unit according to an abnormal condition of the battery cell.

The abnormal condition of the battery cell may be that an internal temperature of the battery cell is higher than or equal to a set temperature.

The extinguishing cartridge may be provided above the battery cell.

The extinguishing cartridge may include a guide portion configured to facilitate the discharge of the extinguishing fluid when the extinguishing fluid is discharged by the triggering unit.

The guide portion may be provided on a bottom surface of the extinguishing cartridge and formed to be inclined to face a vent hole of the battery cell.

The extinguishing cartridge may include a material that melts at a set temperature when a fire occurs in the battery cell.

The triggering unit may include a triggering frame provided between the extinguishing cartridge and the battery cell, a perforating member elastically supported in the triggering frame by an elastic member, and a triggering control unit that restrains the triggering of the perforating member and allows the perforation member to be triggered to the extinguishing cartridge by the elastic member when the battery cell is in the abnormal condition.

The perforating member may have a conical shape in which a diameter becomes smaller toward the extinguishing cartridge.

A discharge flow path for guiding the extinguishing fluid of the extinguishing cartridge may be formed in the perforating member.

The triggering control unit may include a connecting portion electrically connected to the controller, and a variable portion provided in the connecting portion to fix the perforating member and release a fixed state of the perforation member when current is applied from the controller so that the perforation member is triggered to the extinguishing cartridge by the elastic member.

The variable portion may fix the perforating member to the connecting portion and include a material that melts due to the applied current of the controller.

The variable portion may be formed by soldering.

The controller may include a sensor unit configured to detect an internal temperature of the battery cell.

A plurality of battery cells may be provided, and a plurality of triggering units may be provided to correspond to the battery cells.

The controller may operate the triggering unit corresponding to the battery cell in which an event has occurred among the battery cells.

A plurality of battery cells may be provided, the extinguishing cartridge may include a partition member that partitions an internal space into a plurality of spaces to correspond to the battery cells, and a plurality of triggering units are provided to correspond to the battery cells.

A plurality of battery cells may be provided, the extinguishing cartridge may include a frame that forms a plurality of partitioned accommodation spaces corresponding to the battery cells and an extinguishing charge bag detachably provided in each accommodation space of the frame, and a plurality of triggering units may be provided to correspond to the extinguishing charge bags.

The controller may operate the triggering unit corresponding to the battery cell in which an event has occurred among the battery cells.

### BRIEF DESCRIPTION OF THE DRAWINGS

Features will become apparent to those of skill in the art by describing in detail exemplary embodiments with reference to the attached drawings, in which:
FIG. 1 is a diagram schematically showing a configuration of a battery module according to an embodiment;
FIG. 2 is a perspective view schematically showing a battery module according to an embodiment;
FIG. 3 is an exploded perspective view schematically showing a battery module according to an embodiment;
FIG. 4 is a cross-sectional view along line A-A of FIG. 2;
FIG. 5 is a cross-sectional view along line B-B of FIG. 2;
FIG. 6 is a perspective view schematically showing a triggering unit according to an embodiment;
FIG. 7 is a cross-sectional view schematically showing a triggering unit according to an embodiment;
FIG. 8 is a cross-sectional view showing discharge of an extinguishing fluid by a triggering unit according to an embodiment;
FIG. 9 is a cross-sectional view showing a modified example of a perforating member according to an embodiment;
FIG. 10 is a cross-sectional view along line C-C of FIG. 9;
FIG. 11 is a cross-sectional view showing discharge of an extinguishing fluid by a modified example of a perforating member according to an embodiment;
FIG. 12 is a view showing a modified example of an extinguishing cartridge according to an embodiment;
FIG. 13 is an exploded perspective view schematically showing a battery module according to another embodiment;
FIG. 14 is a cross-sectional view schematically showing the battery module in FIG. 13;
FIG. 15 is a block diagram for describing an operation of a controller of the battery module in FIG. 13;
FIG. 16 is a view for describing the operation of the battery module in FIG. 15;
FIG. 17 is a view showing a modified example of an extinguishing cartridge according to another embodiment;
FIG. 18 is an exploded perspective view schematically showing a battery module according to yet another embodiment;
FIG. 19 is a front cross-sectional view schematically showing the battery module in FIG. 18; and
FIG. 20 is a side cross-sectional view schematically showing the battery module in FIG. 18.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "linked to," "connected to," or "coupled to" another element or layer, it may be directly linked, connected, or coupled to the other element or layer or one or more intervening elements or layers may also be present. When an element or layer is referred to as being "directly linked to," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. **In** addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

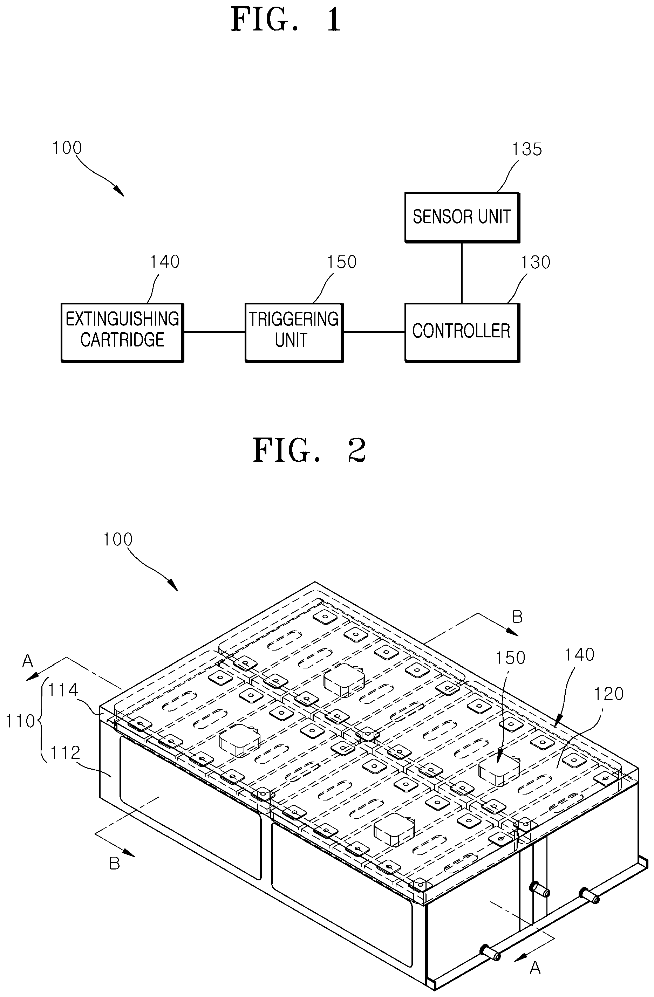

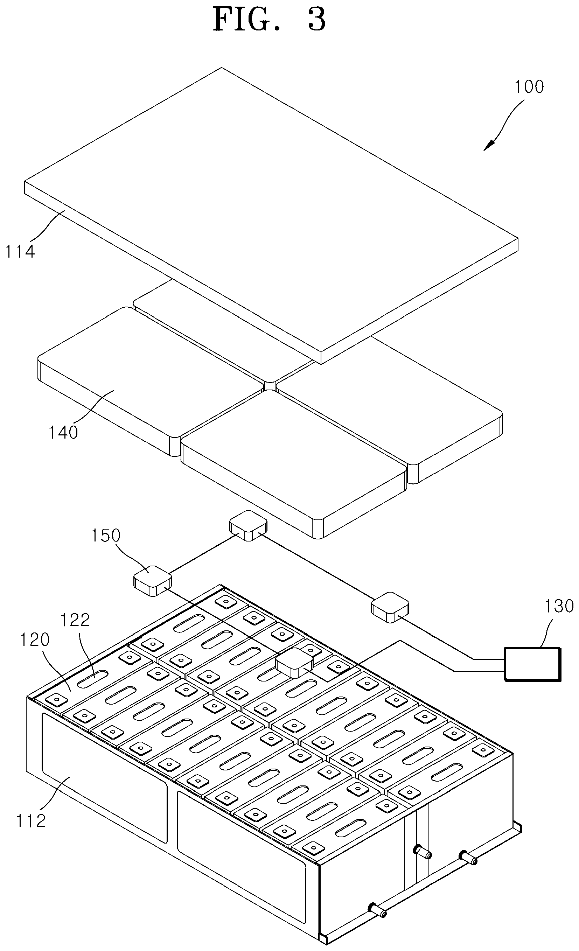

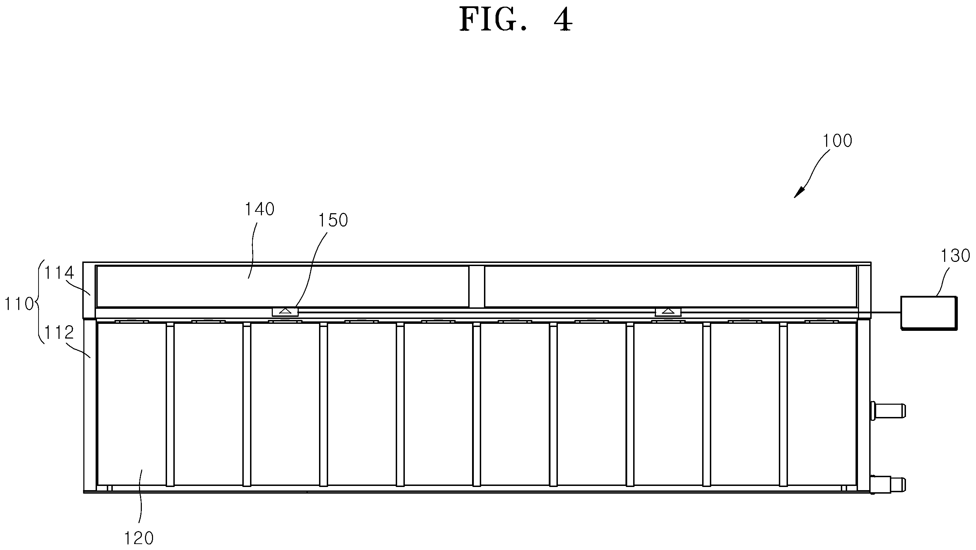

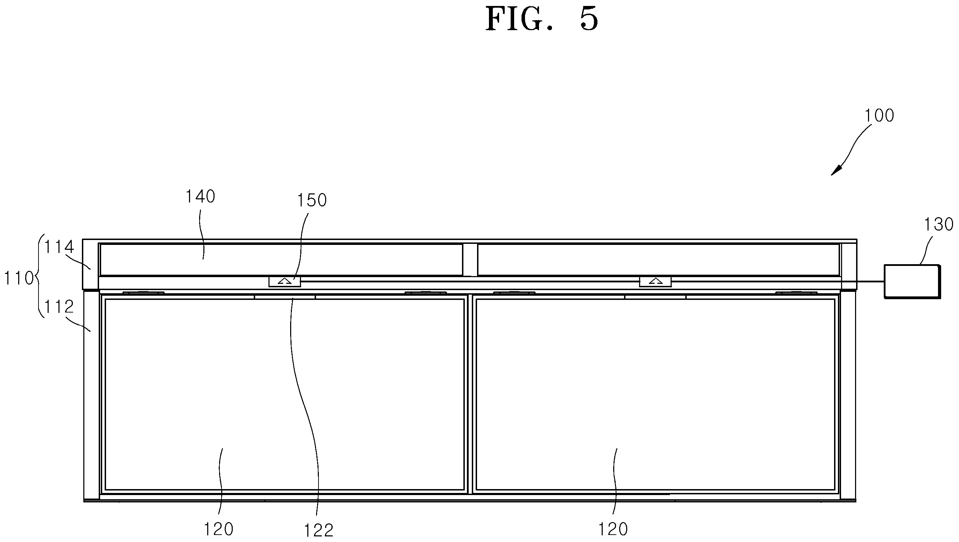

FIG. 1 is a diagram schematically showing a configuration of a battery module according to an embodiment, FIG. 2 is a perspective view schematically showing a battery module according to an embodiment, FIG. 3 is an exploded perspective view schematically showing the battery module in FIG. 2, FIG. 4 is a cross-sectional view along line A-A of FIG. 2, and FIG. 5 is a cross-sectional view along line B-B of FIG. 2.

Referring to FIGS. 1 to 5, a battery module 100 according to the present embodiment may include a housing 110, at least one battery cell 120, and a controller 130. For example, a plurality of battery cells 120 may be accommodated in the housing 110.

The housing 110 may serve as a component that supports the battery cell 120 and protects the battery cell 120 from an external impact and foreign substances. The housing 110 may provide a space to accommodate the battery cell 120 therein. The housing 110 may include a housing body 112 and a housing cover 114.

The housing body 112 may be formed in a shape of a box with an empty interior and an open one side. For example, the open side of the housing body 112 may be disposed to face upward. In addition, the battery cell 120 may be provided inside the housing body 112.

The housing cover 114 may be coupled to the housing body 112 and may close the internal space of the housing body 112. For example, the housing cover 114 may be formed to have a shape of a plate, e.g., a flat shape. The housing cover 114 may be disposed to face the open side of the housing body 112, e.g., an upper side surface of the housing body 112. The housing cover 114 may be fixed to the housing body 112 by various types of coupling methods, e.g., bolting, welding, locking and fitting. To achieve a high amount of fixation giving rise to an extra-ordinary tightness, various types of coupling methods mentioned before could also be combined.

The housing cover 114 may form (e.g., define) a space in which an extinguishing cartridge 140 and a triggering unit 150 (e.g., a trigger), which will be described below, may be provided. That is, the housing cover 114 may be formed in a rectangular parallelepiped shape with an open bottom surface and provided so that the extinguishing cartridge 140 and the triggering unit 150 may be stacked in the internal space thereof.

The battery cell 120 may serve as a unit structure for storing and supplying power in the battery module 100. The battery cell 120 refers to a secondary battery including an electrode assembly, an electrolyte, a cell case, etc. The battery cell 120 may be designed to have various shapes, e.g., a prismatic shape, a circular shape, or an oval shape. For example, referring to FIG. 2, a plurality of battery cells 120 may be arranged in two rows. In another example, the battery cells 120 may be arranged in various ways depending on the space, the electrical capacity, the magnitude of power, etc. of a device to which the battery module 100 is applied.

For example, the battery cells 120 may be electrically connected by a busbar made of a metallic material or the like having electrical conductivity. In addition, the battery cell 120 may be provided with a vent hole 122 that may be opened and closed in response to changes in internal pressure of the cell case. The vent hole 122 may maintain a closed state during normal operation to seal the inside of the cell case. The vent hole 122 may be opened when the internal pressure of the cell case rises to a set level or more due to overcharging or fire of the battery cell 120, and may discharge flames, gas, smoke, etc. generated inside the cell case to the outside of the cell case.

The controller 130 may serve as a component that may control and protect the battery module 100. The controller 130 may include at least one of a battery control unit (BCU), a battery management system (BMS), and a battery disconnect unit (BDU), may measure, e.g., a voltage, state of charge (SOC), temperature, or the like of the battery module 100, and may cut off power when an abnormality such as an overcurrent or overvoltage state occurs.

Since the controller 130 includes electronic components, circuits, etc., the controller 130 may be particularly sensitive to moisture. Therefore, the controller 130 may be provided outside the housing 110.

For example, if the controller 130 and the battery cell 120 were to be disposed in the same space, since condensed water generated by a sudden change in temperature of the battery cell 120 may affect the controller 130, the controller 130 may not operate properly. In addition, cooling air for cooling the battery cell 120 affects the controller 130, thereby causing an abnormality in the controller 130.

The extinguishing cartridge 140 filled with an extinguishing fluid may be provided inside the housing 110. The extinguishing cartridge 140 may be provided above the battery cell 120.

As shown in FIG. 3, the extinguishing cartridge 140 may be disposed to correspond to, e.g., overlap, a plurality of battery cells 120. For example, the extinguishing cartridge 140 may vertically overlap (e.g., along a direction that is normal to the bottom of the housing 110) all the battery cells 120 in the housing 110. For example, as shown in FIG. 3, an area of the housing 110 may be partitioned into four sections, and four extinguishing cartridges 140 may be formed to correspond to the four sections (e.g., the four extinguishing cartridges 140 may respectively overlap the four sections to overlap all the battery cells 120 in the housing 110). In another non-limiting example, a single extinguishing cartridge 140 may be provided to correspond to (e.g., overlap) upper portions of all the battery cells 120.

The extinguishing cartridge 140 may be made of a plastic material, and the extinguishing fluid filled inside the extinguishing cartridge 140 may be provided by being compressed inside the extinguishing cartridge 140 and may be easily discharged by an internal pressure when the extinguishing fluid is discharged by the triggering unit 150 described below.

The extinguishing cartridge 140 may be made of a material that melts when a set temperature is reached when a fire occurs in the battery cells 120. In the present embodiment, the extinguishing cartridge 140 may be made of a plastic material that can melt at the set temperature, but may be varied and made of any material that can melt at the set temperature. For example, referring to FIGS. 3-5, a thickness of the extinguishing cartridge 140 may be smaller than a thickness of the housing cover 114, so the extinguishing cartridge 140 may completely fit within an interior space of the housing cover 114. For example, referring to FIGS. 4-5, the extinguishing cartridge 140 may be attached (e.g., directly attached) to a surface of the housing cover 114 that faces the battery cells 120.

The extinguishing cartridge 140 may be provided so as to be face-to-face with the upper portions of the battery cells 120, and the triggering unit 150 may be provided between the extinguishing cartridge 140 and the battery cells 120. The triggering unit 150 may serve as a component that discharges the extinguishing fluid of the extinguishing cartridge 140 to the battery cells 120. As shown in FIG. 3, a plurality of triggering units 150 may be disposed to correspond to the plurality of battery cells 120, e.g., four triggering units 150 may be disposed to correspond to (e.g., overlap and be connected to respective ones of) the four extinguishing cartridges 140 (e.g., each of the triggering unit 150 may be centered on a corresponding one of the extinguishing cartridges 140). For example, referring to FIGS. 4-5, a combined thickness of the extinguishing cartridge 140 and the triggering unit 150 may equal the thickness of the housing cover 114, so the extinguishing cartridge 140 and the triggering unit 150 may completely fit within an interior space of the housing cover 114.

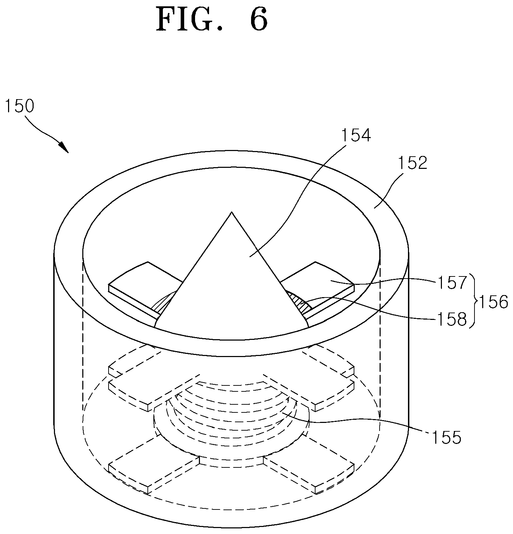

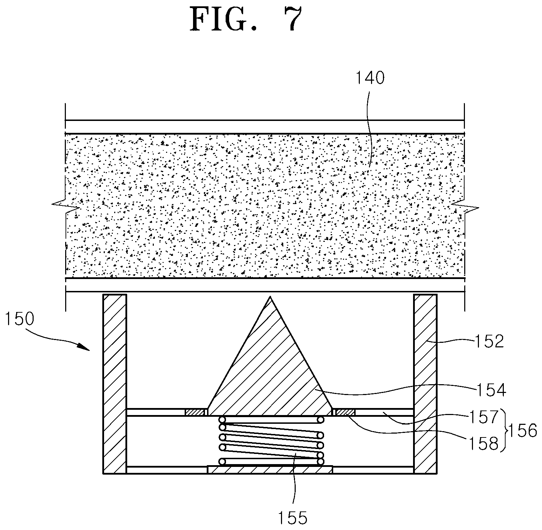

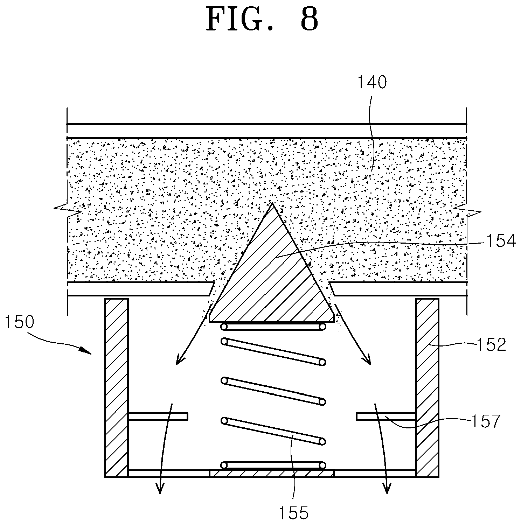

FIG. 6 is a perspective view schematically showing the triggering unit 150, FIG. 7 is a cross-sectional view schematically showing the triggering unit 150, and FIG. 8 is a view showing the discharge of the extinguishing fluid by the triggering unit 150.

Referring to FIGS. 6 to 8, the triggering unit 150 may include a triggering frame 152 provided between the extinguishing cartridge 140 and the battery cell 120, a perforating member 154 (e.g., a perforator) elastically supported by the triggering frame 152, and a triggering control unit 156 (e.g., a triggering controller) that controls the triggering of the perforating member 154. Here, "triggering of the perforating member 154" means that the perforating member 154 elastically supported in the triggering frame 152 by an elastic member 155 is elastically moved by an elastic force of the elastic member 155 to perforate the extinguishing cartridge 140.

The triggering frame 152 may serve as a component that performs the role of a support when the perforating member 154 is elastically moved by the elastic member 155 (e.g., the bottom of the triggering frame 152 supports the elastic member 155 that moves the perforating member 154). The triggering frame 152 may form a space with an exposed upper portion so that the perforating member 154 is seated and exposed (e.g., so the elastic member 155 with the perforating member 154 may be accommodated in the space of the triggering frame 152 to be exposed to the extinguishing cartridge 140 through the open upper portion of the triggering frame 152).

A height of the triggering frame 152 may be formed at a height at which an upper end of the perforating member 154 does not protrude (e.g., a height of the triggering frame 152 may be larger than and protrude beyond a total height of the perforating member 154 and a compressed elastic member 155). This means that the perforating member 154 is accommodated inside the triggering frame 152, which can prevent the upper end of the perforating member 154 from coming into contact with a bottom surface of the extinguishing cartridge 140 due to the protrusion of the upper end of the perforating member 154, thereby preventing the unintended perforation of the extinguishing cartridge 140. The triggering frame 152 may serve to support (e.g., and separate) the extinguishing cartridge 140 from the upper surface of the battery cell 120.

The perforating member 154 seated in the triggering frame 152 may be elastically supported by the elastic member 155, and the triggering may be controlled by the triggering control unit 156. For example, the elastic member 155 may be formed of a coil spring that elastically supports the perforating member 154 from the triggering frame 152.

The perforating member 154 may be formed in a conical shape that becomes narrower in a direction oriented toward the extinguishing cartridge 140, e.g., the conical shape may have a sharp edge facing the extinguishing cartridge 140. For example, referring to FIGS. 6-8, the perforating member 154 may have a conical shape (e.g., a triangular cross-section). In another example, the perforating member 154 may have any suitable shape, e.g., a triangular pyramid shape or a rectangular pyramid shape, able to perforate the extinguishing cartridge 140.

The triggering control unit 156 may include a connecting portion 157 electrically connected to the controller 130 and a variable portion 158 that fixes the perforating member 154 to the connecting portion 157. The variable portion 158 releases the perforating member 154 from its fixed state on the elastic member 155 when current is applied from the controller 130.

The connecting portion 157 may be formed on the triggering frame 152 and may be electrically connected to the controller 130. The connecting portion 157 may be made of a metallic material that is electrically connected to the controller 130, e.g., the connecting portion 157 may be made of an aluminum material.

The variable portion 158 may fix the perforating member 154 to the connecting portion 157 and may include a material that melts when current is applied by the controller 130. For example, the variable portion 158 may be formed by soldering to connect the perforating member 154 to the connecting portion 157 and suppress the movement of the perforating member 154 (e.g., the variable portion 158 may be a solder). In the present embodiment, the variable portion 158 may be formed by soldering, or any type of variable portion 158 may be used within the technical concept of releasing the restraint of the perforating member 154 by operating when current is applied by the controller 130.

The controller 130 may control the triggering unit 150 according to abnormal conditions of the battery cell 120. In the present embodiment, the abnormal condition of the battery cell 120 is a case in which an internal temperature of the battery cell 120 is higher than or equal to a set temperature.

To this end, the controller 130 may include a sensor unit 135 (e.g., a sensor) for detecting the temperature of the battery cell 120. When the abnormal condition of the battery cell 120 detected by the sensor unit 135 occurs, the controller 130 may apply current through the connecting portion 157 that electrically connects the controller 130 to the perforating member 154, and the variable portion 158 may melt due to the application of the current to release the restraint of the perforating member 154.

For example, the abnormal condition of the battery cell 120 may be a change in voltage of the battery cell 120. When an event such as a short circuit of the battery cell 120 occurs, the triggering unit 150 may be operated through the controller 130 by detecting the change in voltage of the battery cell 120.

Referring to FIG. 8, when the variable portion 158 melts due to application of current, the restraint of the perforating member 154 is released and the perforating member 154 may be elastically moved by the elastic member 155 toward the extinguishing cartridge 140. The perforating member 154 may perforate the extinguishing cartridge 140 to discharge the extinguishing fluid (e.g., along the arrows in FIG. 8) toward the battery cell 120.

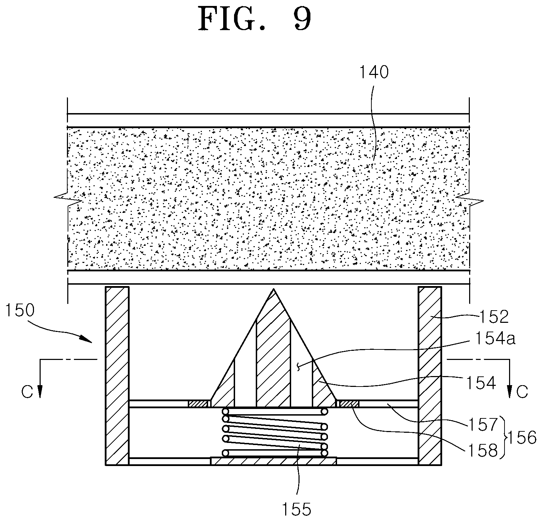

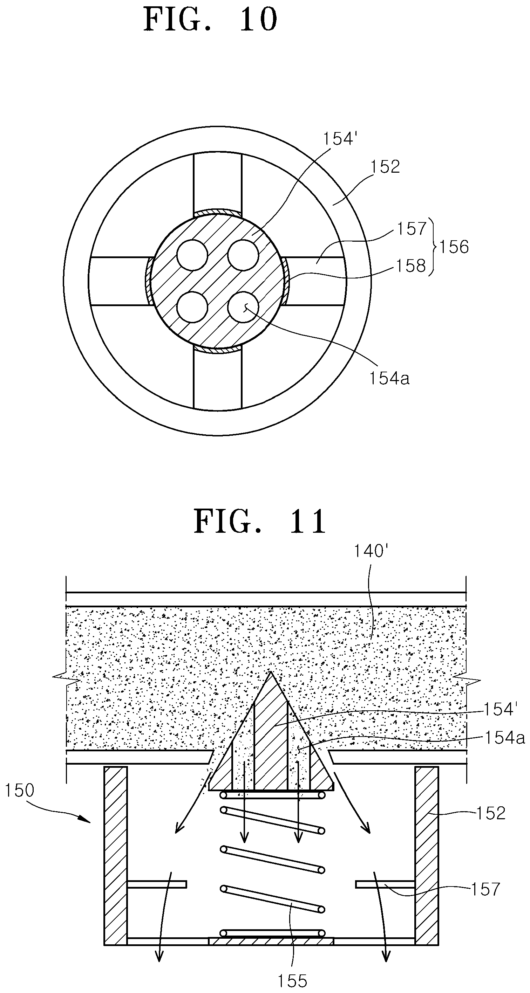

FIG. 9 is a view showing a modified example of a perforating member according to an embodiment, FIG. 10 is a cross-sectional view along line C-C of FIG. 9, and FIG. 11 is a view showing the discharge of the extinguishing fluid by a modified example of the perforating member in FIG. 9.

Referring to FIGS. 9 to 11, a perforating member 154' may be formed in a conical shape that become narrower in a direction oriented toward the extinguishing cartridge 140. In addition, a discharge flow path 154a that guides the extinguishing fluid of the extinguishing cartridge 140 may be formed in (e.g., through) the perforating member 154.

For example, referring to FIG. 10, a plurality of discharge flow paths 154a may be formed to pass through the perforating member 154', e.g., from an upper portion to a lower portion of the perforating member 154'. That is, the discharge flow paths 154a are formed as a plurality of through-holes, and when the perforating member 154' perforates the extinguishing cartridge 140 by the operation of the triggering unit 150, the extinguishing fluid inside the extinguishing cartridge 140 may be discharged to the battery cells 120 through a peripheral portion of the perforating member 154 and through the discharge flow paths 154a of the perforating member 154.

The extinguishing fluid may be discharged more smoothly through the discharge flow path 154a. This can prevent the perforating member 154' from hindering the discharge of the extinguishing fluid by blocking the perforation of the extinguishing cartridge 140 created by the elastic movement of the perforating member 154.

In the present embodiment, the discharge flow path 154a is shown as a through-hole formed in a vertical direction of the perforating member 154, but various design changes are possible, e.g., a groove formed in a circumferential surface of the perforating member 154' in order to smoothly discharge the extinguishing fluid of the extinguishing cartridge 140.

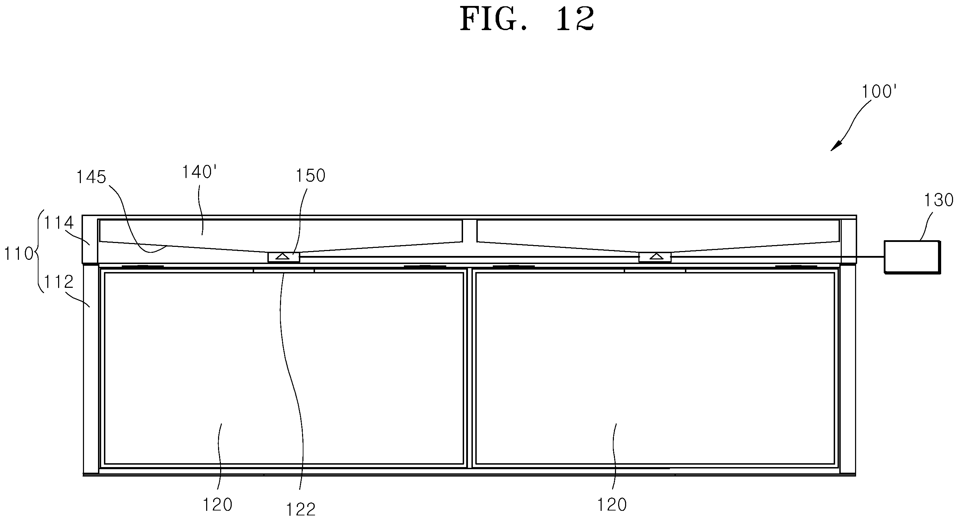

FIG. 12 is a view showing a modified example of an extinguishing cartridge according to an embodiment.

Referring to FIG. 12, an extinguishing cartridge 140' according to the present embodiment may include a guide portion 145 that facilitates the discharge of the extinguishing fluid when the extinguishing fluid is discharged by the triggering unit 150. The guide portion 145 may be formed on the bottom surface of the extinguishing cartridge 140' and formed to be inclined (e.g., with respect to a bottom of the housing) to face the vent hole 122 of the battery cell 120.

Since the extinguishing cartridge 140' is made of a plastic material and the bottom surface of the extinguishing cartridge 140' is formed as an inclined surface formed to be inclined downward toward a center, when the extinguishing cartridge 140 is perforated by the triggering unit 150, the extinguishing fluid inside the extinguishing cartridge 140 may be easily discharged along the guide portion 145. In particular, since the extinguishing fluid is guided to the vent hole 122 of the battery cell 120 along the guide portion 145, a fire suppression effect can be improved.

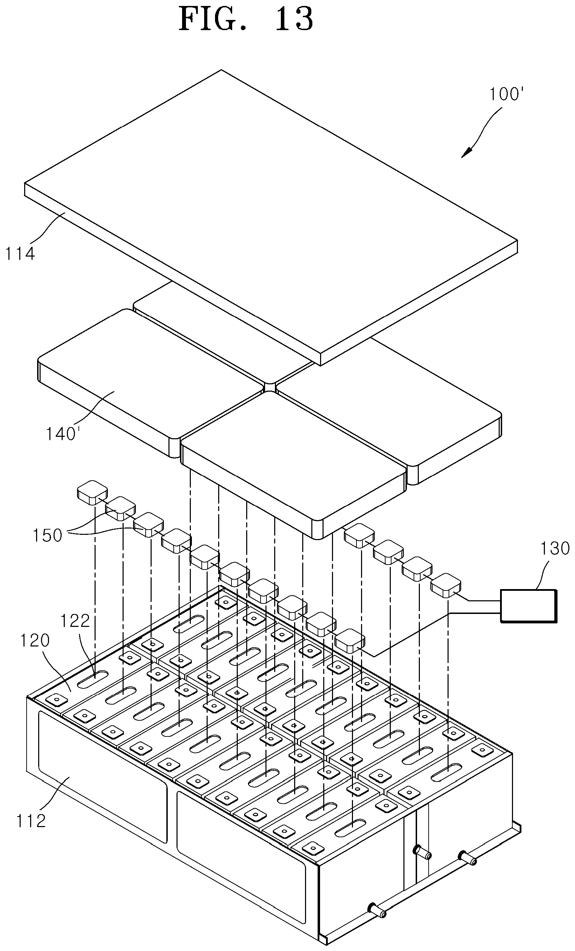

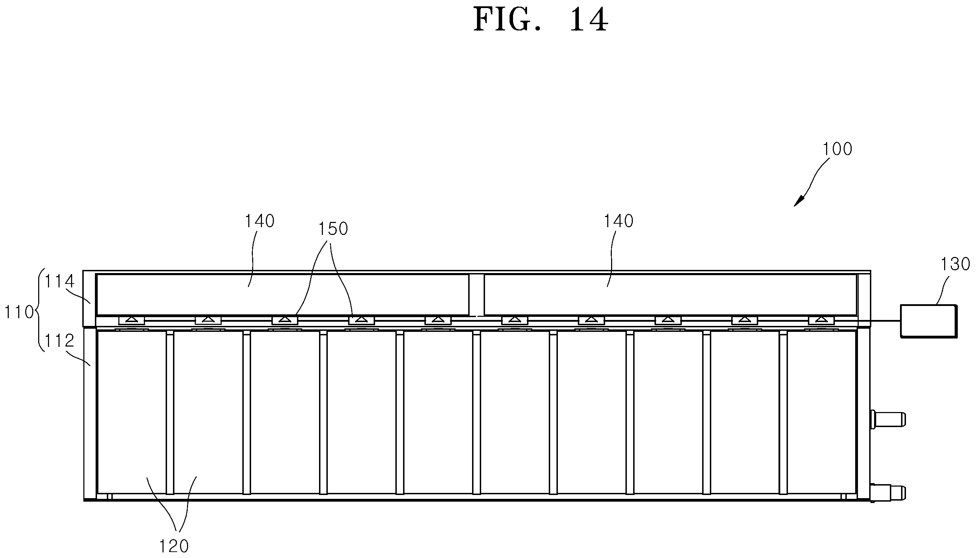

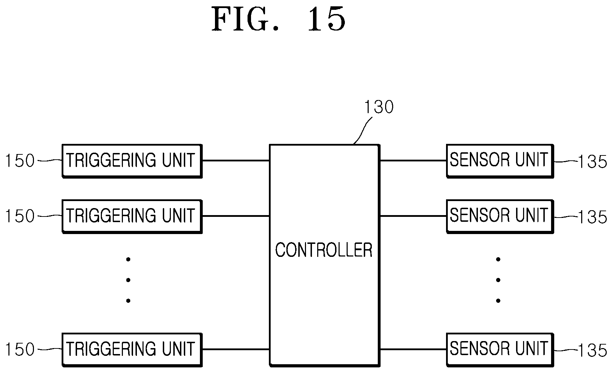

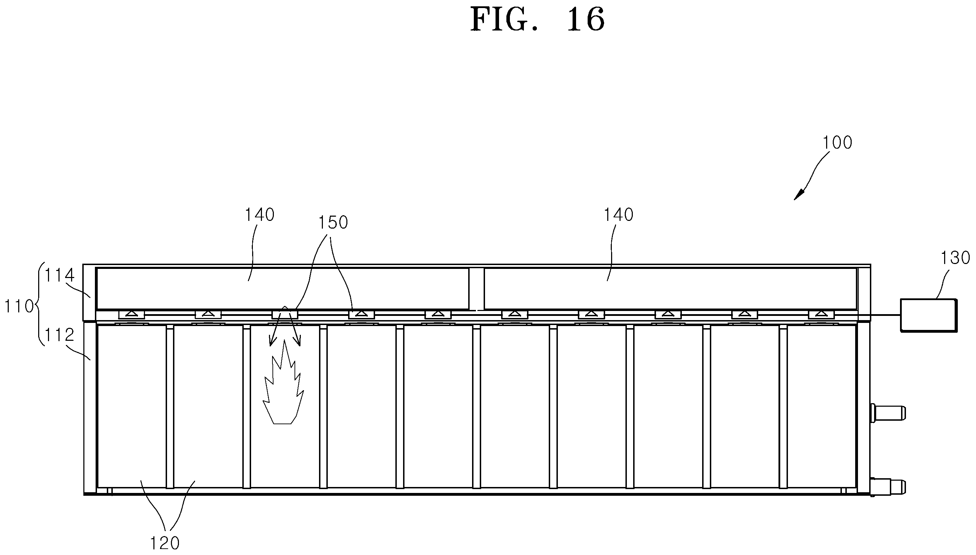

FIG. 13 is an exploded perspective view schematically showing a battery module according to another embodiment, FIG. 14 is a cross-sectional view schematically showing the battery module in FIG. 13, FIG. 15 is a block diagram for describing the operation of a controller of the battery module in FIG. 13, and FIG. 16 is a view for describing the operation of the battery module in FIG. 13.

Referring to FIGS. 13 to 16, a battery module 100' according to yet another embodiment may include a plurality of triggering units 150. The plurality of triggering units 150 may be provided to correspond to the battery cells 120. That is, the triggering units 150 may be provided between the extinguishing cartridge 140 and the battery cells 120 to correspond one-to-one to the battery cells 120 (e.g., the number of triggering units 150 may equal the number of the battery cells 120). This can enable an initial response and maximize fire suppression efficiency because the extinguishing fluid of the extinguishing cartridge 140 can be discharged by directly focusing on the battery cell 120 in which an event has occurred.

As shown in FIGS. 15 and 16, a temperature of the corresponding battery cell 120 may be detected by the sensor unit 135 provided in each battery cell 120. In addition, when an internal temperature of the battery cell 120 is higher than or equal to a set temperature, the controller 130 may operate the triggering unit 150 corresponding to the corresponding battery cell 120.

The controller 130 may apply current to the connecting portion 157 electrically connected to the perforating member 154, the variable portion 158 formed by soldering may melt due to the applied current and release the restraint of the perforating member 154. When the restraint of the perforating member 154 is released, the perforating member 154 may elastically move to perforate the extinguishing cartridge 140, thereby allowing the extinguishing fluid to be discharged into the vent hole 122 of the corresponding battery cell 120.

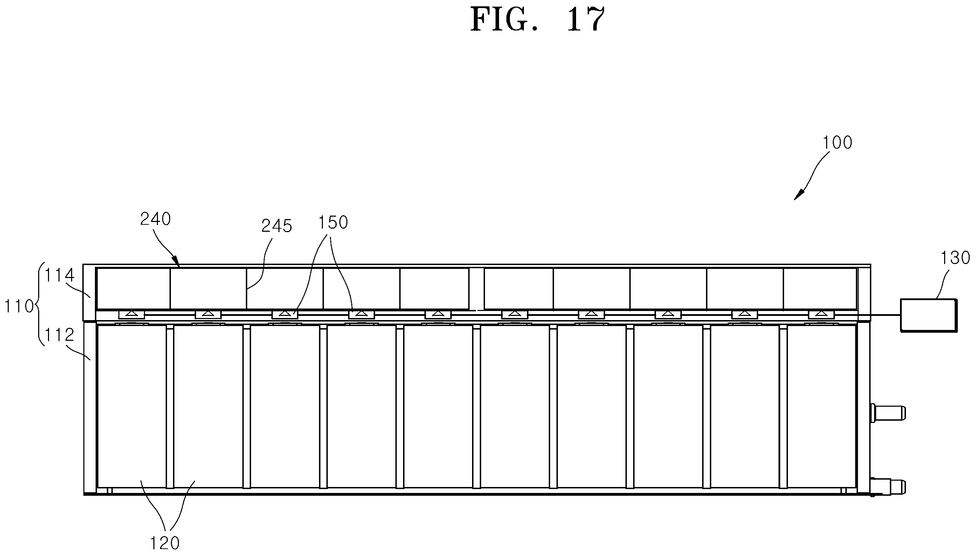

FIG. 17 is a view showing a modified example of an extinguishing cartridge according to an embodiment.

Referring to FIG. 17, an extinguishing cartridge 240 may include a partition member 245 that partitions an internal space thereof into a plurality of spaces to correspond to the battery cells 120. An individual space partitioned by the partition member 245 may be filled with a predetermined amount of extinguishing fluid. In addition, a plurality of triggering units 150 may be provided to correspond to the battery cells 120. Therefore, each individual space partitioned by the partition member 245 may correspond one-to-one to the triggering unit 150.

This can enable an initial response and maximize fire suppression efficiency because the extinguishing fluid of the extinguishing cartridge 240 can be discharged by directly focusing on the battery cell 120 in which an event has occurred. In addition, since only the predetermined amount of extinguishing fluid filled in the individual space partitioned by the partition member 245 can be used, unnecessarily excessive consumption of extinguishing fluid can be prevented, thereby having an economic effect. In addition, the extinguishing cartridge 240 can be reused by filling the corresponding individual space in which the extinguishing fluid was consumed with the extinguishing fluid and repairing the perforation created by the triggering unit 150.

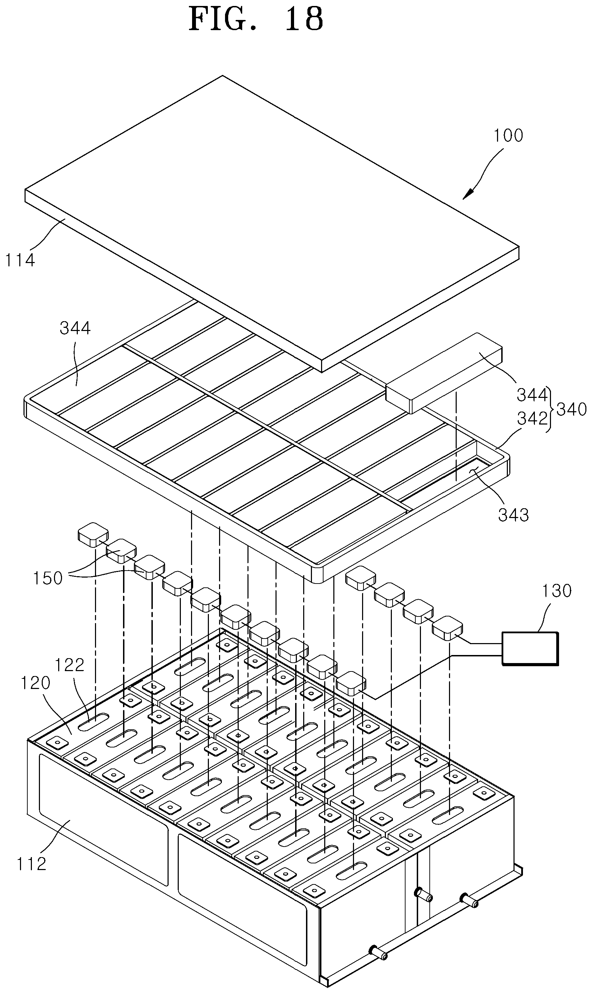

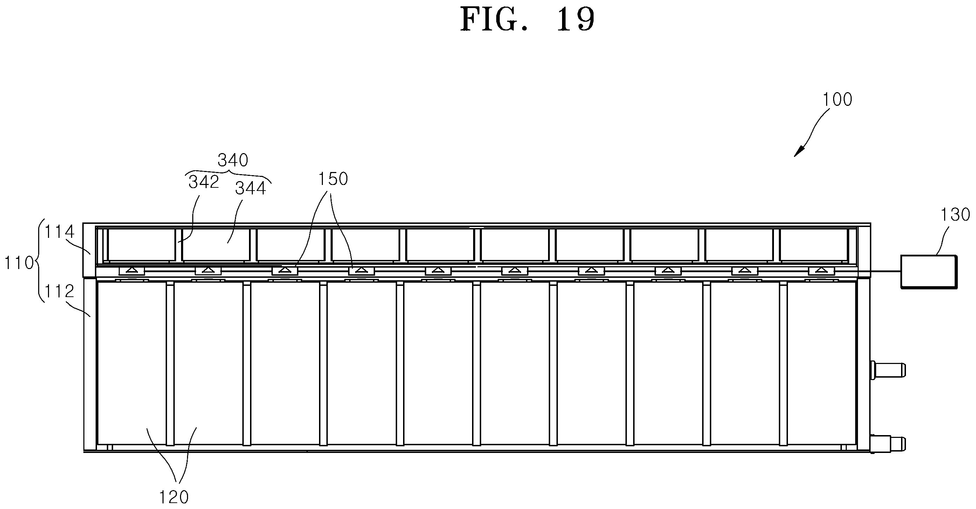

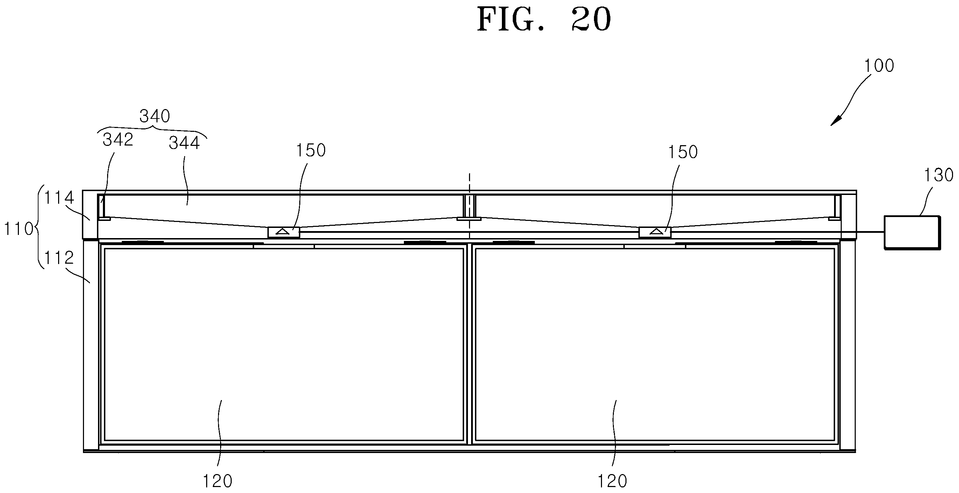

FIG. 18 is an exploded perspective view schematically showing a battery module according to yet another embodiment, FIG. 19 is a front cross-sectional view schematically showing the battery module in FIG. 18, and FIG. 20 is a side cross-sectional view schematically showing the battery module in FIG. 18.

Referring to FIGS. 18 to 20, the battery module 100 may include an extinguishing cartridge 340 including a plurality of extinguishing charge bags 344 and a plurality of triggering units 150. For example, the extinguishing cartridge 340 may include a frame 342 that forms a plurality of partitioned accommodation spaces 343 corresponding to the battery cells 120 and the extinguishing charge bags 344 detachably provided in the accommodation spaces 343 of the frame 342, respectively.

The plurality of triggering units 150 may be provided to correspond to the battery cells 120. That is, the triggering unit 150 may correspond to each accommodation space 343 of the frame 342 and may be provided to correspond one-to-one to the extinguishing charge bag 344. This can enable an initial response and maximize fire suppression efficiency because the extinguishing fluid of the extinguishing charge bag 344 can be discharged by directly focusing on the battery cell 120 in which an event has occurred.

The sensor unit 135 provided in each battery cell 120 may detect a temperature of the corresponding battery cell 120, and when an internal temperature of the battery cell 120 is higher than or equal to a set temperature, the controller 130 may operate the triggering unit 150 corresponding to the corresponding battery cell 120. The controller 130 may apply current to the connecting portion 157 electrically connected to the perforating member 154, and when the variable portion 158 melts due to the applied current to release the restraint of the perforating member 154, the corresponding extinguishing charge bag 344 may be perforated by the elastic movement of the perforating member 154 so that the extinguishing fluid may be discharged into the vent hole 122 of the corresponding battery cell 120.

The extinguishing charge bag 344 may be made of a plastic material and formed as a flexible synthetic resin bag because its shape may be maintained by the frame 342. **In** addition, since only a predetermined amount of extinguishing fluid is used by the structure in which the extinguishing charge bag 344 is stored in the accommodation space 343 of the frame 342, an unnecessarily excessive consumption of extinguishing fluid can be prevented, thereby having an economic effect, and the extinguishing charge bag 344 can be reused by replacing the corresponding extinguishing charge bag 344 in which the extinguishing fluid was consumed.

As described above, the extinguishing cartridge is provided inside the housing, and the extinguishing fluid of the extinguishing cartridge can be discharged (e.g., sprayed) on the battery cells according to changes in environmental factors (e.g., a temperature, a pressure, and the like) of the battery cell, thereby enabling an initial response and preventing the spread of fire to adjacent battery cells. In addition, since the extinguishing cartridge filled with the extinguishing fluid may be provided above the battery cell to intensively discharge the extinguishing fluid on an area that faces the battery cell in a face-to-face manner, it is possible to improve fire suppression efficiency.

In addition, since the extinguishing cartridge is composed of an extinguishing charge bag corresponding to each battery cell, it is possible to suppress a fire of the corresponding battery cell and provide a cost-saving effect by replacing the extinguishing charge bag in which the extinguishing fluid was exhausted, and since the extinguishing cartridge is made of a material that melts due to the heat of a fire when the fire occurs in the battery cell, it is possible to suppress the fire even when the triggering unit fails to operate.

According to an embodiment, an extinguishing cartridge is provided inside a housing, and an extinguishing fluid of the extinguishing cartridge can be discharged to a battery cell according to changes in environmental factors (a temperature, a voltage, and the like) of the battery cell, thereby enabling an initial response and preventing the spread of fire to adjacent battery cells.

According to an embodiment, since the extinguishing cartridge filled with the extinguishing fluid is provided above the battery cell to intensively discharge the extinguishing fluid on an area that faces the battery cell in a face-to-face manner, it is possible to improve fire suppression efficiency.

According to an embodiment, since the extinguishing cartridge is composed of an extinguishing charge bag corresponding to each battery cell, it is possible to suppress a fire of the corresponding battery cell and replace the extinguishing charge bag in which the extinguishing fluid was exhausted, thereby having a cost-saving effect.

According to an embodiment, since the extinguishing cartridge is made of a material that melts due to the heat of a fire when the fire occurs in the battery cell, it is possible to suppress the fire even when a triggering unit fails to operate.

However, the effects obtainable through the present disclosure are not limited to the above effects, and other technical effects that are not mentioned will be clearly understood by those skilled in the art from the following description of the present disclosure.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A battery module (100, 100'), comprising:
a housing (110);
at least one battery cell (120) accommodated inside the housing (110);
an extinguishing cartridge (140, 140', 240, 340) inside the housing ( 110), the extinguishing cartridge (140, 140', 240, 340) being filled with an extinguishing fluid;
at least one triggering unit (150) inside the housing (110), the at least one triggering unit (150) being configured to discharge the extinguishing fluid from the extinguishing cartridge (140, 140', 240, 340) toward the at least one battery cell (120); and
a controller (130) configured to control the at least one triggering unit (150) according to an abnormal condition of the at least one battery cell (120).

2. The battery module (100, 100') as claimed in claim 1, wherein the abnormal condition of the at least one battery cell (120) is that an internal temperature of the at least one battery cell (120) is higher than or equal to a set temperature.

3. The battery module (100, 100') as claimed in claim 1 or 2, wherein the extinguishing cartridge (140, 140', 240, 340) is above the at least one battery cell (120).

4. The battery module (100, 100') as claimed in claims 1 to 3, wherein the extinguishing cartridge (140, 140', 240, 340) includes a guide portion (145) configured to facilitate the discharge of the extinguishing fluid when the extinguishing fluid is discharged by the triggering unit (150).

5. The battery module (100, 100') as claimed in claim 4, wherein the guide portion (145) is on a bottom surface of the extinguishing cartridge (140, 140', 240, 340), the guide portion (145) being inclined with respect to a bottom of the housing (110) and faces a vent hole (122) of the at least one battery cell (120).

6. The battery module (100, 100') as claimed in claims 1 to 5, wherein the extinguishing cartridge (140, 140', 240, 340) includes a material that melts at a set temperature when a fire occurs in the at least one battery cell (120).

7. The battery module (100, 100') as claimed in claims 1 to 6, wherein the at least one triggering unit (150) includes:
a triggering frame (152) between the extinguishing cartridge (140, 140', 240, 340) and the at least one battery cell (120);
a perforating member (154, 154') elastically supported in the triggering frame (152) by an elastic member (155); and
a triggering control unit (156) configured to control movement of the perforating member (154, 154') toward the extinguishing cartridge (140, 140', 240, 340).

8. The battery module (100, 100') as claimed in claim 7, wherein the perforating member (154, 154') has a conical shape, the conical shape having a diameter that decreases in a direction oriented toward the extinguishing cartridge (140, 140', 240, 340).

9. The battery module (100, 100') as claimed in claim 7 o 8, wherein the perforating member (154, 154') includes a discharge flow path (154a) therethrough, the discharge flow path (154a) being configured to guide the extinguishing fluid of the extinguishing cartridge (140, 140', 240, 340) through the perforating member (154, 154').

10. The battery module (100, 100') as claimed in claims 7 to 9, wherein the triggering control unit (156) includes:
a connecting portion (157) electrically connected to the controller (130); and
a variable portion (158) in the connecting portion (157) and affixed to the perforating member (154, 154'), the variable portion (158) being configured to disconnect from the perforation member when current is applied from the controller (130), so that the perforation member is released to move toward the extinguishing cartridge (140, 140', 240, 340) by the elastic member (155).

11. The battery module (100, 100') as claimed in claim 10, wherein the variable portion (158) fixes the perforating member (154, 154') to the connecting portion (157), the variable portion (158) including a material that melts due to the current applied from the controller (130).

12. The battery module (100, 100') as claimed in claims 1 to 11, wherein the controller (130) includes a sensor unit (135) configured to detect an internal temperature of the at least one battery cell (120).

13. The battery module (100, 100') as claimed in claims 1 to 12, wherein the at least one battery cell (120) includes a plurality of battery cells (120), and the at least one triggering unit (150) includes a plurality of triggering units (150) corresponding to the plurality of battery cells (120), respectively.

14. The battery module (100, 100') as claimed in claim 13, wherein the extinguishing cartridge (140, 140', 240, 340) includes a partition that partitions an internal space into a plurality of spaces corresponding to the plurality of battery cells (120).

15. The battery module (100, 100') as claimed in claim 13, wherein the extinguishing cartridge (140, 140', 240, 340) includes a frame (342) that partitions an internal space into accommodation spaces (343) corresponding to the plurality of battery cells (120), and extinguishing charge bags (344) detachably provided in the accommodation spaces (343) of the frame (342), the plurality of triggering units (150) corresponding to the extinguishing charge bags (344), respectively.
